Europäisches Patentamt

European Patent Office

Office européen des brevets

(11) Numéro de publication: **0 391 854**

**A1**

## (12) DEMANDE DE BREVET EUROPEEN

(21) Numéro de dépôt: 90810257.7

(22) Date de dépôt: 30.03.90

(51) Int. Cl.⁵: **B29C 67/22, B29C 45/17**

(30) Priorité: 03.04.89 FR 8904359

(43) Date de publication de la demande:
10.10.90 Bulletin 90/41

(84) Etats contractants désignés:
BE DE DK ES FR GB GR IT LU NL

(71) Demandeur: Vanotti, Gérard
Domaine de la Côte Lent
F-01124 Saint-Paul de Varax(FR)

Demandeur: Berlincourt, Michel
85b, Cours de Verdun, Résidence "LE
MOLIERE"
F-01100 Oyonnax(FR)

(72) Inventeur: Berlincourt, Michel
85b, Cours de Verdun, Résidence "Le
Molière"
F-01100 Oyonnax(FR)

(74) Mandataire: Meylan, Robert Maurice et al
c/o BUGNION S.A. 10, route de Florissant
Case Postale 375
CH-1211 Genève 12 - Champel(CH)

(54) **Procédé de fabrication de pièces en matière thermoplastique à paroi mince et installation pour la mise en oeuvre du procédé.**

(57) Le procédé consiste à introduire préalablement un gaz sous pression dans le moule de manière à créer une contre-pression déterminée, à introduire la matière plastique plastifiée additionnée d'au moins un agent gonflant dans le moule, puis de laisser échapper du moule le gaz sous pression. L'installation comprend des moyens d'injection (6 à 8), un moule hermétique (1, 2) relié à une source de gaz comprimé (10), une vanne de mise sous pression du moule (11), une vanne d'évacuation du moule (15), un pressostat (16) mesurant la pression dans le moule et des moyens de commande contrôlés par ce pressostat pour commander l'injection de la matière thermoplastique dans le moule.

FIG 1

La présente invention concerne un procédé de fabrication de pièces en matière thermoplastique à paroi mince par moulage par injection. Par paroi mince on entend une paroi dont l'épaisseur est de 1 à 4 mm, les dimensions de la pièce pouvant être quelconques

Le moulage par injection de pièces en matière thermoplastique à paroi mince présentant une certaine surface se heurte depuis de nombreuses années à un problème qui n'a pas trouvé de solution satisfaisante jusqu'ici : pour remplir le moule jusque dans ses recoins il est nécessaire d'introduire la matière thermoplastique plastifiée sous une pression très élevée. Cette pression élevée nécessite de son côté une pression de fermeture du moule également très élevée, pression qui entraîne à son tour des problèmes d'étanchéité du moule. Une pression élevée signifie également une machinerie et des mesures de sécurité coûteuses. Dans des conditions de travail économiquement acceptables, les pièces obtenues présentent des défauts aux endroits les plus éloignés des points d'injection.

Il est par ailleurs connu de fabriquer des pièces en matière thermoplastique présentant un coeur poreux et une peau compacte, c'est-à-dire des pièces épaisses en introduisant dans le moule un gaz sous-pression avant l'injection de la matière thermoplastique. Un tel procédé est décrit dans les brevets FR 2 291 847, FR 2.433.407 et US 4 479 914. Dans le procédé selon le brevet FR 2 291 847 on réchauffe le gaz à une température supérieure à la température ambiante avant de l'introduire dans le moule. La pression du gaz est soumise à des oscillations et le moule comprend des éléments d'empreinte mobiles qui doivent être déplacés pour former la peau compacte. On n'a jamais songé jusqu'ici à appliquer une telle technique à la fabrication de pièces à parois minces et même si on y avait songé cette technique se serait révélée inappropriée pour des pièces de forme complexe, l'emploi de parties d'empreinte mobiles étant inconcevable. Le procédé connu se déroule en outre en cinq phases dont la quatrième prévoit le retour d'une partie de la matière plastique du coeur du produit dans le cylindre d'injection, ce qui risque de provoquer un bouchon dans le canal d'injection.

Dans le procédé selon le brevet FR 2 433 407 on évacue le gaz de pressurisation de l'empreinte pendant l'injection ou immédiatement après celle-ci. Le moule est refoidi pendant l'injection. Comme dans le procédé précédent la contre-pression est utilisée pour obtenir une peau lisse et compacte sur une pièce à coeur poreux. Dans le procédé selon le brevet US 4 479 914, on évacue une partie du gaz de l'empreinte pendant injection, puis on relie ensuite le moule à une chambre à vide pour faciliter l'expansion de la résine moussante. L'installation nécessaire est relativement compliquée.

On n'a jamais songé jusqu'ici à utiliser une telle technique pour le moulage de pièces à paroi mince car le rôle de la contre-pression était exclusivement de rendre compacte et lisse la surface d'un article à coeur poreux. Comme on le verra plus loin, l'introduction d'un gaz pressurisé dans un moule peut avoir d'autre effets surprenants.

L'invention a pour but d'obtenir des pièces en matière thermoplastique à paroi mince de qualité irréprochable, avec des pressions d'injection relativement basses, du même ordre de grandeur que celles utilisées pour l'injection de pièces à paroi épaisse.

Le procédé selon l'invention est caractérisé en ce qu'on introduit préalablement, de manière connue en soi, un gaz sous-pression dans le moule de manière à créer une contre-pression déterminée dans le moule, qu'on introduit ensuite la matière plastique plastifiée dans le moule, additionnée d'au moins un agent gonflant et qu'on laisse échapper du moule le gaz sous-pression.

Le résultat obtenu est surprenant. Pour une même pièce, alors qu'une pression de 450 Bars s'avère insuffisante sans contre-pression de gaz, une pression d'injection de 100 Bars est tout à fait suffisante, avec contre-pression, pour obtenir une pièce irréprochable. En outre, la durée du cycle de fabrication d'une pièce est pratiquement le même qu'avec la technique antérieure, ce qui est également surprenant, compte tenu de la phase supplémentaire de mise sous-pression du moule. La force de fermeture du moule peut être réduite de plus de 50%. Ces réductions de pression se traduisent par une machinerie plus simple et moins coûteuse et une plus grande securité. La durée du cycle de travail restant pratiquement la même, la productivité de la machine est inchangée.

Ainsi se trouve résolu un problème existant depuis longtemps.

Il convient de souligner que la mise sous-pression du moule n'a pas du tout le même but que dans la fabrication de pièces à noyau poreux et peau compacte, où la contre-pression sert précisément à obtenir la peau compacte. Dans le procédé de fabrication selon l'invention, la mise sous-pression du moule a pour effet de facilité la pénétration de la matière thermoplastique plastifiée dans le moule. Cet effet n'a pas été étudié en soi, mais on peut en donner une explication possible : le gaz introduit dans le moule crée un film sur la paroi du moule qui lubrifie le moule et permet à la matière plastique de pénétrer plus facilement jusque dans les recoins du moule.

L'agent gonflant augmente la fluidité de la matière plastifiée et supprime les retassures dues aux dépressions. Il permet donc de réduire la pression d'injection. La matière plastifiée est plaquée contre les parois du moule.

Cette technique permet en outre de dépasser les normes habituelles en ce qui concerne le rapport hauteur/épaisseur des parois.

L'invention a également pour objet une installation pour la mise en oeuvre du procédé, caractérisée en ce qu'elle comprend un plastificateur, des moyens d'injection, un moule hermétique relié à une source de gaz comprimé, une vanne de mise sous-pression du moule, une vanne d'évacuation du gaz sous-pression du moule, un pressostat mesurant la pression dans le moule et des moyens de commande contrôlés par ce pressostat pour commander l'injection de la matière plastique dans le moule.

L'invention sera mieux comprise par la description d'un exemple de mise en oeuvre du procédé selon l'invention, description faite en relation avec le dessin annexé dans lequel :

La figure 1 est une vue schématique d'une installation pour la production de pièces à paroi mince;

la figure 2 est une vue perspective d'une pièce à paroi mince obtenue par le procédé selon l'invention; et

la figure 3 est une vue en coupe selon III-III de la figure 2.

La figure 4 est une vue en coupe du moule utilisé dans l'installation de la figure 1.

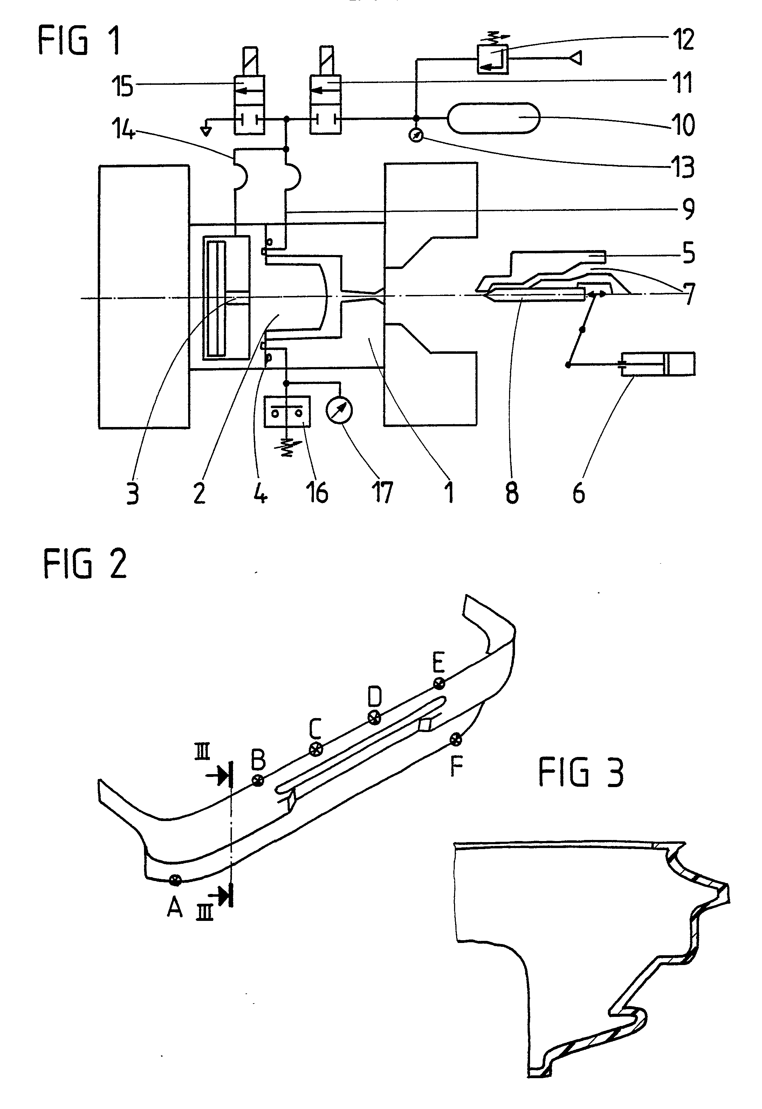

L'installation représentée schématiquement à la figure 1 comprend un moule constitué d'une partie fixe et d'une partie mobile 2 actionnable par un vérin. Il comprend des extracteurs actionnés par un vérin 3. L'étanchéité au joint des deux parties du moule est assurée par des garnitures d'étanchéité 4. L'installation comprend en outre un ponton d'injection mobile 5 déplaçable axialement au moyen d'un vérin 6. Le ponton mobile 5 est associé à un plastificateur conventionnel non représenté, duquel la matière thermoplastique plastifiée pénètre dans une buse 7 munie d'un obturateur à aiguille 8. Cet appareillage est conventionnel. Le moule est relié par un conduit 9 à un réservoir 10 de gaz sous-pression, par exemple de l'azote, à travers une électrovanne de mise sous-pression 11. Le réservoir de gaz sous-pression 10 fonctionne en accumulateur et il est lui même alimenté par un compresseur à travers un manodétendeur taré 12. Au lieu d'azote on pourrait tout simplement utiliser de l'air. La pression est affichée par un manomètre 13. En aval, l'électrovanne de mise en pression 11 est relié à un second conduit 14 relié aux moyens de fermeture du moule et contribue à maintenir cette fermeture pendant l'injection en compensant la pression du gaz dans le moule. Les conduits 9 et 14 sont en outre reliés à une électrovanne de vidange 15 pour l'évacuation du gaz sous-pression du moule et des moyens de fermeture de ce moule. La pression dans le moule est en outre mesurée par un pressostat 16, dont l'information est introduite dans un dispositif de commande non représenté qui commande le cycle des opérations. La pression dans le moule peut en outre être lue sur un manomètre 17.

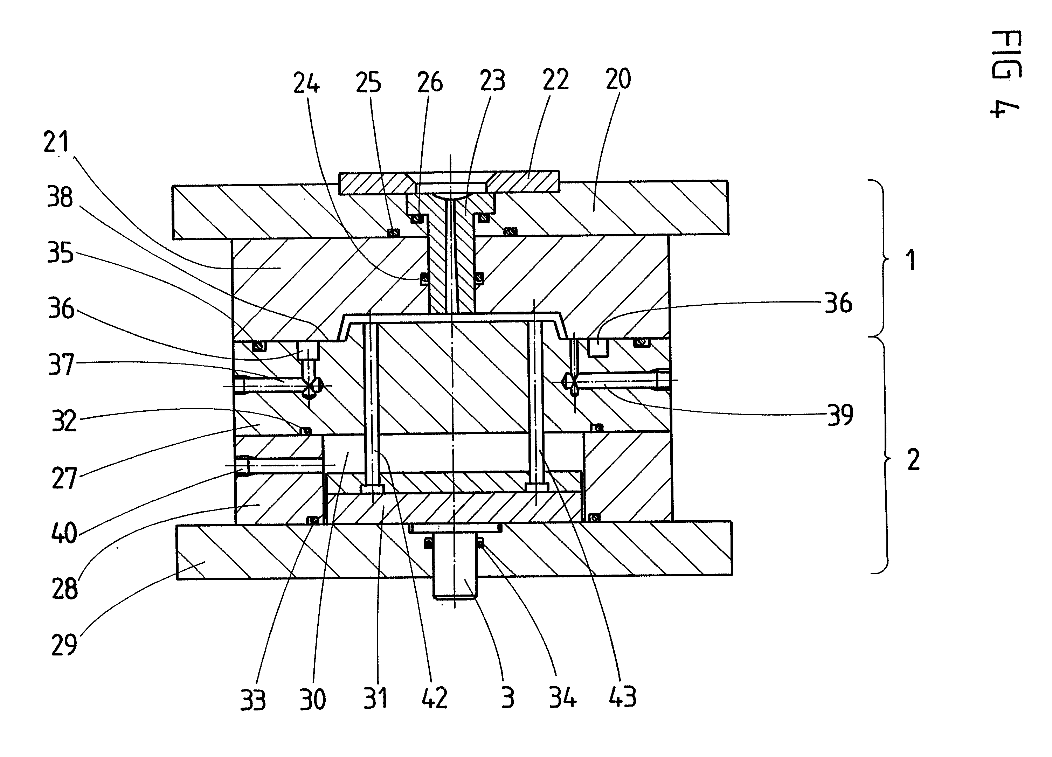

Le moule est représenté plus en détail à la figure 4. La partie fixe 1 du moule est constituée d'une plaque frontale 20 sur laquelle est fixée une coquille 21 munie d'une empreinte. La plaque frontale 20 porte une platine 22 et les deux pièces 20 et 21 sont traversées par une cheminée 23. L'étanchéité est assurée par des garnitures de joint 24, 25 et 26 placées entre ces différentes pièces.

La partie mobile 2 du moule comprend une seconde coquille 27 fixée sur un cadre 28 lui-même fixé sur une plaque 29 traversée par le vérin 3. Les pièces 27, 28 et 29 définissent une chambre 30 dans laquelle est montée une plaque d'éjection 31 munie d'un certain nombre d'éjecteurs tels que 42 et 43. Les plans de joint des pièces 27 et 28 ainsi que 28 et 29 sont rendus hermétiques par des garnitures d'étanchéité 32 et 33. Le passage du vérin 3 à travers la plaque 29 est également rendue hermétique par une garniture d'étanchéité 34. Le plan de joint de la coquille 27 est également muni d'une garniture d'étanchéité 35. Dans le plan de joint, entre la garniture 35 et l'empreinte, la coquille 27 présente un canal périphérique 36 entourant l'empreinte. Ce canal périphérique 36 communique avec un conduit 37 relié au conduit 9 de la figure 1. Le canal périphérique 36 communique en outre avec l'empreinte par des évents radiaux 38 répartis sur tout le pourtour de l'empreinte. Ces évents présentent avantageusement une largeur de 10mm et une profondeur de 0,03mm et ils sont espacés les uns des autres de 15 mm. Au niveau de ces évents débouche également un conduit 39 relié au pressostat 16 ou à un autre capteur de pression. La chambre 30 est reliée par un conduit 40 au conduit 14 de la figure 1.

Le plan de joint de la coquille 27 présente donc un très grand nombre d'évents 38 de très faible section. Grâce au canal périphérique 36 et aux nombreux évents 35, il est possible de remplir rapidement le moule de gaz à la pression désirée et de l'évacuer également rapidement, tout en maintenant une parfaite fermeture du moule pour la matière plastique injectée. Grâce au canal 39, la pression à l'intérieur du moule est mesurée très près de l'empreinte.

La chambre 30 contenant le porte-extracteurs 31 est mis à la même pression que le moule, de telle sorte qu'il n'y a pas de fuite de gaz par le passage des extracteurs.

Le cycle d'injection se déroule comme suit : le ponton d'injection 5 étant en retrait, comme représenté, le moule est fermé puis le ponton 5 est avancé jusqu'à ce que la buse d'injection soit en contact avec l'entrée du moule. L'électrovanne 11 est alors ouverte et le moule est mis sous-pression. Dès que la pression désirée est atteinte, le pressostat 16 déclenche l'injection. En cours d'injection, c'est-à-dire sur la course de la vis d'injection, la vanne de mise sous-pression 10 est fermée et simultanément la vanne de vidange 15 est ouverte, ce qui permet au gaz de s'échapper du moule et à la matière plastifiée de remplir complétement le moule. L'électrovanne 15 est fermée à la fin du cycle. La succession des opérations se déroule automatiquement. La contrepression est supérieure à 10 Bars, généralement de 15 à 40 Bars. Elle doit être au moins égale à la pression des agents gonflants. La contre pression est maintenue constante par le pressostat 16 pendant l'injection. Le gaz étant simplement chassé par la matière injectée.

Les figures 2 et 3 représentent, à titre d'exemple, une pièce avantageusement fabriquée par le procédé selon l'invention. Il s'agit d'un bouclier de pare-chocs de voiture. Les points d'injection sont désignés par les lettres A, B, C, D, E et F. L'épaisseur de la pièce est de 3 à 4 mm et sa hauteur de 500 mm. La matière thermoplastique utilisée est du polypropylène copolymère chargé EPDM additionné d'agents gonflants tels que azodidicarbonamide, bicarbonate de soude, et d'autres agents connus ou des agents gonflants gazeux, par exemple de l'azote, injecté en bout de vis selon le procédé direct "gazing". Les agents gonflants sont ajoutés dans une proportion de 0,1 à 5% en poids. La matière est injectée sous une pression de 100 Bars et le moule est fermé avec une force de 800 tonnes. Le cycle dure 2 min 20s et la pièce obtenue, d'un poids de 4kg ne présente aucune déformation et un aspect absolument satisfaisant.

La même pièce a été injectée par le procédé traditionnel. Le polypropylène copolymère chargé EPDM, sans agent gonflant, a été injecté avec une pression de 450 Bars, le moule etant fermé avec une force de 1700 tonnes. Durée du cycle : 2 min 15 s. La pièce obtenue, d'un poids de 4,2 Kg est déformée. Elle a tendance à se refermer sur elle-même. Une conformation est donc nécessaire. Il serait en outre inconcevable de mouler une telle pièce avec un moule comportant des empreintes mobiles.

Il s'avère en outre que la pièce obtenue par le procédé selon l'invention, avec addtion d'agents gonflants, présente une meilleure résistance aux chocs que la pièce obtenue par le procédé traditionnel. On relevera en outre qu'elle est un peu plus légère. L'addition d'agents gonflants a donc non seulement pour effet de faciliter l'injection, mais également d'alléger la pièce et d'améliorer la résistance aux chocs.

## Revendications

1. Procédé de fabrication de pièces en matière thermoplastique à paroi mince par moulage par injection, caractérisé en ce qu'on introduit préalablement, de manière connue en soi, un gaz sous-pression dans le moule de manière à créer une contre-pression déterminée dans le moule, qu'on introduit ensuite la matière plastique plastifiée, additionnée d'au moins un agent gonflant, dans le moule, et qu'on laisse échapper du moule le gaz sous-pression.

2. Procédé selon la revendication 1, caractérisé en ce qu'on laisse échapper le gaz du moule avant la fin de l'injection en maintenant constante la pression du gaz dans le moule.

3. Procédé selon la revendication 1 ou 2, caractérisé en ce que le ou les agents gonflants sont ajoutés dans une proportion de 0,1 à 5% en poids de la matière thermoplastique.

4. Procédé selon l'une des revendications 1 à 3, caractérisé en que la contre-pression dans le moule est comprise entre 15 et 40 Bars.

5. Installation pour la mise en oeuvre du procédé selon la revendication 1, caractérisée en ce qu'elle comprend un plastificateur, des moyens d'injection, un moule hermétique relié à une source de gaz comprimé, une vanne de mise sous-pression du moule, une vanne d'évacuation du moule, un pressostat mesurant la pression dans le moule et des moyens de commande contrôlés par ce pressostat pour commander l'injection de la matière thermoplastique dans le moule.

6. Installation selon la revendication 5, dont le moule est constitué d'au moins deux parties munies d'empreintes et venant s'appliquer l'une contre l'autre selon un plan de joint dont l'étanchéité est assurée par au moins une garniture d'étanchéité, caractérisée en ce que l'une des parties du moule (27) présente, dans le plan de joint, un canal périphérique (36) relié aux vannes de mise sous pression et d'évacuation (11, 15) et entourant l'empreinte, entre ladite garniture (35) et l'empreinte, et des évents (38) reliant ledit canal à l'empreinte, ces évents étant répartis sur tout le pourtour de l'empreinte.

7. Installation selon la revendication 6, caractérisée en ce que les évents (38) sont constitués par un grand nombre de rainures radiales de très faible section.

8. Installation selon la revendication 7, caractérisée en ce que les évents (38) ont une profondeur d'environ 0,03 mm et une largeur d'environ 10 mm et qu'ils sont espacés les uns des autres d'environ 15mm.

9. Installation selon l'une des revendication 5 à 8, caractérisée en ce que le moule comprend, sous la partie mobile du moule, une chambre (30) fermée hermétiquement et contenant le porte-extracteurs (31), et également reliée (40) aux vannes de
mise sous pression et d'évacuation.

**FIG 1**

**FIG 2**

**FIG 3**

FIG 4

EP 0 391 854 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | FR-A-2 291 847 (INST. PO METALOSNANIE) * Page 2, lignes 8-12; revendications * --- | 1-9 | B 29 C 67/22 B 29 C 45/17 |
| X,D | FR-A-2 433 407 (ASAHI-DOW) * Page 1, lignes 1-4; revendications * --- | 1-9 | |
| X,D | US-A-4 479 914 (E.J. BAUMRUCKER) * Ensemble du brevet * --- | 1-9 | |
| A | FR-A-2 156 558 (STEX) * Page 3, lignes 1-12; page 5, lignes 21-33; revendications * ----- | 1-4 | |

**DOMAINES TECHNIQUES RECHERCHES (Int. Cl.5)**

B 29 C

**Le présent rapport a été établi pour toutes les revendications**

| Lieu de la recherche | Date d'achèvement de la recherche | Examinateur |
|---|---|---|
| LA HAYE | 09-07-1990 | KUSARDY R. |

EPO FORM 1503 03.82 (P0402)